# EUROPEAN PATENT SPECIFICATION

(11) **EP 1 900 146 B1**
(45) Date of publication and mention of the grant of the patent: **26.12.2012**
(21) Application number: 06764538.2
(22) Date of filing: 29.06.2006
(51) Int. Cl.: H04L 12/56, H04W 16/00

(54) **RESOURCE ALLOCATION METHOD, COMMUNICATION SYSTEM, NETWORK ELEMENT, MODULE, COMPUTER PROGRAM PRODUCT AND COMPUTER PROGRAM DISTRIBUTION MEDIUM**
BETRIEBSMITTELZUTEILUNGSVERFAHREN, KOMMUNIKATIONSSYSTEM, NETZWERKELEMENT, MODUL, COMPUTERPROGRAMMPRODUKT UND COMPUTERPROGRAMM-VERTEILUNGSMEDIUM
PROCEDE D'ATTRIBUTION DE RESSOURCES, SYSTEME DE COMMUNICATION, ELEMENT DE RESEAU, MODULE, PRODUIT-PROGRAMME INFORMATIQUE ET SUPPORT DE DISTRIBUTION DE PROGRAMME INFORMATIQUE

(30) Priority: 30.06.2005 FI 20055370
(43) Date of publication of application: 19.03.2008
(73) Proprietor: Nokia Siemens Networks Oy, 02610 Espoo (FI)
(72) Inventor: PHAN, Vinh, V., FI-90100 Oulu (FI); LILJESTRÖM, Henrik, FI-00150 Helsinki (FI)
(74) Representative: Bruglachner, Thomas E.
(86) International application number: PCT/FI2006/050299
(87) International publication number: WO 2007/003707

(56) References cited:
- WO-A1-03/045103
- WO-A1-2004/028181
- JP-A- 2006 140 635
- US-A1- 2005 207 359
- US-B1- 6 792 273
- '3rd Generation Partnership Project; Technical Specification Group Radio Access Network: FDD Enhanced Uplink; Overall description, Stage 2; (Release 6)' 3GPP TR 25.309 V6.2.0 vol. CHAPTER 9, March 2005, XP008076530

## Description

### FIELD OF INVENTION

The invention relates to a resource allocation method, a communication system, a network element, a module, a computer program product and a computer program distribution medium.

### BACKGROUND OF THE INVENTION

A concept of Enhanced Dedicated Channel (E-DCH) or High-Speed Uplink Packet Access (HSUPA) is designed for enhancing uplink packet access in Universal Mobile Telecommunications System (UMTS) terrestrial radio access (UTRA) frequency division duplex (FDD) using dedicated transport channels. A technical objective is to improve the performance of uplink dedicated transport channels, i.e. to increase capacity and throughput and reduce delay by using Node-B controlled fast scheduling and adaptive transmissions or retransmissions.

While applying E-DCH in practice, a radio network controller allocates HSUPA cell resources to base stations (a base station is also called node B). The E-DCH operation, however, has to be adjusted to the capacity and capabilities of base stations of the communication system. Base stations have to reserve dedicated resources for E-DCH related processing, including E-DCH physical channels, Medium Access Control for E-DCH (MAC-e), E-DCH Frame Protocol (FP) and transport bearers.

In the following, some documents are briefly discussed.

WO 03/045103 A1 (ERICSSON TELEFON AB L M [SE]; VAN LIESHOUT GERT-JAN [NL]; ANDERSSON BE) 30 May 2003 (2003-05-30) discloses a method and arrangement for congestion control in a network comprising different resource controlling and connection controlling units. In the congestion, a resource controlling unit indicates a proposal for a new Transport Format Set for the connections controlled by a connection controlling unit (SRNC) and indicates the cause for the congestion such that the connection controlling unit can take suitable measures.

3rd Generation Partnership Project; Technical Specification Group Radio Access Network: FDD Enhanced Uplink; Overall description, Stage 2; (Release 6)", 3GPP TR25.309 V6.2.0, vol. CHAPTER 9, March 2005 (2005-03), XP008076530 specifies the Node B controlled scheduling based on uplink resource requests and downlink resource indications together with a set of rules on how the user equipment shall behave with respect to this signalling.

US 6 792 273 B1 relates to reserving resources in a cellular radio communications system. Resources are allocated using prediction. One example relates to advance reservation of data processing and memory resources needed to accommodate probable handover operations for a mobile radio connection.

WO 2004/028181 A1 relates to a radio system and a method for managing radio resources in a radio system. The method comprises receiving transport capacity information on transport network, determining a transport capacity limit for the radio cell based on the transport capacity information, adjusting in the base station the radio capacity information based on the transport capacity limit and managing radio resources of the radio network by using the signalled adjusted radio capacity information on the radio cell, for example.

### BRIEF DESCRIPTION

According to an aspect of the invention, there is provided a resource allocation method in a communication system, the method comprising: determining an upper limit for a network resource by an upper level network element; signalling the upper limit by the upper level network element to a lower level network element unit determining a user device-specific upper limit for the another or same network resource; determining by a lower level network element the user device-specific upper limit for the network resource taking into account the upper limit; and allocating resources of the unit lower level network element to a predetermined user according to the user device-specific upper limit, wherein the allocating of resources comprises allocating hardware and/or software resources for receiving Enhanced Dedicated Channel (E-DCH) transmissions from a user device.

According to another aspect of the invention, there is provided a communication system comprising: means in an upper level network element for determining an upper limit for a network resource; means in the upper level network element for signalling the upper limit to a lower level network element unit determining a user device-specific upper limit for the another or same network resource; means in the lower level network element for determining the user device-specific upper limit for the network resource taking into account the upper limit; and means in the lower level network element for allocating resources of the lower level network element unit to a predetermined user according to the user device-specific upper limit, wherein the resource allocation is allocation of hardware and/or software resources for receiving Enhanced Dedicated Channel (E-DCH) transmissions from a user device.

According to another aspect of the invention, there is provided a module in a lower level network element, comprising: means for receiving an upper limit set for a network resource; means for determining a user device-specific upper limit for another or same the network resource taking into account the upper limit; and means for allocating internal resources of the network element to a predetermined user according to the user device-specific upper limit, wherein the allocating comprises allocating hardware and/or software resources for receiving Enhanced Dedicated Channel (E-DCH) transmissions from a user device.

According to another aspect of the invention, there is provided a computer program product encoding a computer program of instructions for executing a computer process for resource allocation, the process comprising: receiving an upper limit set for a network resource; determining a user device-specific upper limit for the another or same network resource taking into account the upper limit; and allocating internal resources of a network unit to a predetermined user according to the user device-specific upper limit, wherein the allocating comprises allocating hardware and/or software re-sources for receiving Enhanced Dedicated Channel (E-DCH) transmissions from a user device.

According to another aspect of the invention, there is provided a computer program distribution medium readable by a computer and encoding a computer program of instructions for executing a computer process for resource allocation, the process comprising: receiving an upper limit set for a network resource; determining a user device-specific upper limit for the another or same network resource taking into account the upper limit; and allocating internal resources of a network unit to a predetermined user according to the user device-specific upper limit, wherein the allocating comprises allocating hardware and/or software re-sources for receiving En-hanced Dedicated Channel (E-DCH) transmissions from a user device.

The invention provides several advantages.

An embodiment of the invention provides means for reserving resources, especially hardware and/or software resources, in a base station for E-DCH transmissions. Additionally, the reservation of resources offers a potential to use resources in an efficient and economical way. If the scheduling decisions are not taken into consideration, resources have to be reserved according to peak data rates of the user devices, which is uneconomical as far as resource utilization is concerned.

### BRIEF DESCRIPTION OF THE DRAWINGS

In the following, the invention will be described in greater detail with reference to the embodiments and the accompanying drawings, in which
Figure 1 shows an example of a communication system;
Figure 2 is a flow chart;
Figure 3 illustrates an example of using a pointer;
Figure 4 illustrates an example of a network element; and
Figure 5 illustrates another example of a network element.

### DETAILED DESCRIPTION OF THE INVENTION

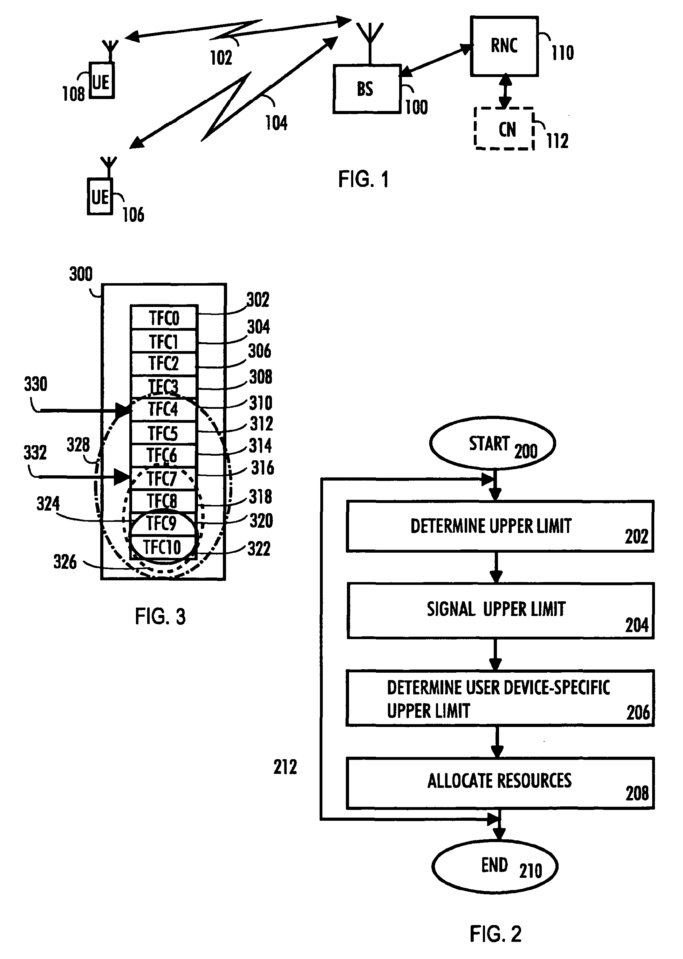

With reference to Figure 1, we examine an example of a communication system to which embodiments of the invention can be applied. The present invention can be applied to various communication systems, especially to a Universal Mobile Telecommunications System (UMTS) radio access network. It is a radio access network which includes wideband code division multiple access (WCDMA) technology and which can also offer real-time circuit and packet switched services. The embodiments are not, however, restricted to the systems given as examples but a person skilled in the art may apply the solution to other communication systems provided with the necessary properties.

It is clear to a person skilled in the art that the method according to the invention can be applied to systems utilizing different air interface standards. Orthogonal frequency division multiplexing (OFDM) is widely used in wireless local and metropolitan area networks. In Evolved UMTS terrestrial radio access network (UTRAN), the downlink is proposed to be based on OFDM, and for the uplink, various frequency division multiple access (FDMA) methods have been proposed. Any modulation and coding method may be used, such as quadrature phase shift keying (QPSK), as well as any multi-antenna transmission method.

Figure 1 is a simplified illustration of a data transmission system to which the solution according to the invention is applicable. This is a part of a cellular radio system which comprises a base station (or node B) 100, which has bi-directional radio links 102 and 104 to user devices 106 and 108. The user devices may be fixed, vehicle-mounted or portable. The base station includes transceivers, for instance. From the transceivers of the base station, a connection is provided to an antenna unit that establishes bi-directional radio links to the user devices. The base station is further connected to a controller 110, a radio network controller (RNC) or a base station controller (BSC), which transmits the connections of the devices to the other parts of the network. The base station controller of the radio network controller controls in a centralized manner several base stations connected to it. The base station controller or the radio network controller is further connected to a core network 112 (CN). Depending on the system, the counterpart on the CN side can be a mobile services switching centre (MSC), a media gateway (MGW) or a serving GPRS (general packet radio service) support node (SGSN) etc.

It should be noticed that in future radio networks, the functionality of an RNC or a BSC may be distributed among (possibly a subset of) base stations.

The radio system can also communicate with other networks, such as a public switched telephone network or the Internet.

First, the basics of base station scheduling in the UMTS are explained.

On the downlink, a resource indication, typically Scheduling Grant, is required to indicate to a user device the maximum amount of uplink re-sources it may use. When issuing Scheduling Grant messages, a base station may use quality of service (QoS) related information provided by a serving radio network controller (SRNC). User devices may also transmit QoS related information with Scheduling Request messages.

Two types of Scheduling Grant messages exist: an Absolute Grant and a Relative Grant message. Absolute Grant messages provide an absolute limit for the maximum amount of uplink resources a user device may use. Relative Grant messages increase or decrease resource limitation compared to a previously used value.

Absolute Grant messages are sent by a serving E-DCH cell. They are valid for one user device, a group of user devices or for all user devices serviced by the same base station. An Absolute Grant message contains the identity (E-DCH radio Network Temporary Identifier, E-RNTI) of a user device (or a group of user devices) to which the grant is intended, the maximum power ratio the user device is allowed to use, and a flag indicating whether the Absolute Grant message is applicable to a single process or to all processes.

In the following, Medium Access Control (MAC) architecture on the UTRAN side is briefly clarified. E-DCH MAC multiplexing is logical channel multiplexing supported by Medium Access Control for an E-DCH (MAC-e) level.

The UTRAN MAC architecture includes a new MAC-e entity and a new MAC-es entity. MAC-es is a MAC-e sub-layer. One MAC-e entity per a base station and one MAC-es entity in a SRNC are configured for each user device using E-DCH. MAC-es is further coupled to MAC-d which is MAC for a normal Dedicated Channel.

In a base station, one MAC-e entity for each user device and one E-DCH scheduler for the base station are usually provided. A MAC-e entity and an E-DCH scheduler handle HSUPA specific functions. MAC-e entity also includes an E-DCH control entity and a Hybrid Automatic repeat Request (HARQ) entity.

The E-DCH scheduler is base station specific and it manages E-DCH cell resources between user devices. The E-DCH scheduler manages scheduling requests and scheduling assignments. An E-DCH control entity is, in turn, responsible for reception of scheduling requests and transmission of scheduling assignments. HARQ-entities are, for instance, responsible for supporting stop and wait HARQ protocols.

In High-Speed Uplink Packet Access (HSUPA), scheduling is carried out in a base station. Hence, the base station is able to control uplink power allocated to user devices. Therefore, in resource allocation, a potential exist to perform mapping between granted power and the maximum data rate a user device is allowed to transmit.

In code division systems, such as WCDMA, the capacity of a network is restricted by interference caused by a user to other users. Interference limitation means power limitation. Thus, network resources (could also be called radio resources or telecom resources), for example a data rate, are limited by the maximum power allowed to a user. In practice, this means that scheduling is carried out taking the maximum power into consideration.

Since resource allocation is carried out by a base station and required signalling is carried out at Open Systems Interconnection Reference Model (OSI model) layer 1 (physical layer), the resource allocation can be dynamic, providing a possibility to dynamically share network resources between user devices.

In embodiments of the resource allocation method presented in this application, different pointers may be used to define base station resources (usually hardware resources) necessary for the base station to be able to receive Enhanced Dedicated Physical Channel (E-DPCH) transmissions from a user device. From resource management's point of view, Enhanced Physical Data Channels (E-DPDCH) are the most important channels. Pointers are usually user (or user device) specific.

In the following, an embodiment of the resource allocation method is explained in further detail by means of Figure 2. The embodiment provides a resource allocation method that combines network scheduling of available network resources, such as transmit power and data rates, among users with allocation of internal resources of a network element, such as a base station, or a module (hardware and/or software resources). The embodiment enables both dynamic scheduling and dynamic internal resource allocation.

The embodiment starts in block 200.

In block 202, an upper limit for a network resource is determined.

In this application, the concept of a network resource means resources (or services) a communication network provides to a user, such as data rate. Internal or processing resources mean hardware and/or software resources of a unit or a module providing network resources. An example of such a unit is a network element, such as a base station.

In systems supporting E-DCH, typically, an upper limit for a predetermined network resource, such as a data rate, is set. The limit usually corresponds to the maximum capability, for example the maximum transmission data rate of a user device, but it can be lower, for instance, if a network does not support the maximum data rate of a user device. The upper limit may be set by an upper level network element, such as a radio network controller (RNC). Thus, the upper level network element may restrict network resource allocation by setting an upper limit lower than that of the capability of the user device in the particular resource.

Each user device in the system usually has an upper limit of its own. In order to enable a network element to set an upper limit, a user device may signal its maximum capability to the network element.

The upper limit may be user device-specific or, more typically, cell-specific. Usually in the case of a cell-specific upper limit, the upper limit is semi-static, in other words, it is updated only quite rarely.

The upper limit may be marked in a memory by using a first pointer (a node B pointer). An example of a use of pointers is explained below. The function of the first pointer is to indicate a current level (amount) of allocated network element resources, for example, resources reserved in a base station or another unit taking care of operations of a base station. It is obvious to a person skilled in the art that means other than a pointer may also be used for indicating reserved resources.

In block 204, the upper limit is signalled to a unit determining a user device-specific upper limit for another or the same network resource.

The signalling may be provided between a stand-alone upper level network element, such as a radio network controller, and a stand-alone lower level network element, such as a base station (node B). The signalling may also be provided between different modules in the same network element (or in another device taking care of network control), depending on the architecture of the communication system. The modules may also be called an upper level network element and a lower level network element. The signalling may, of course, be carried out wirelessly or by using a wired connection.

Usually in the case of a cell-specific upper limit, the upper limit is semi-static, in other words, it is updated only quite rarely.

In block 206, the user device-specific upper limit is determined for the network resource, taking into account the upper limit.

Typically, the lower level network element or a module carrying out network control may set a new lower value as a maximum for a network resource, such as a data rate, allowed to a user device. In a system supporting E-DCH, a new lower maximum may be set while scheduling is carried out, preferably with Absolute or Relative Grants.

A second maximum limit (the user device-specific upper limit) may be marked in a memory by using a second pointer (a user device pointer). The function of the second pointer is to indicate a current level (amount) of allocated user device resources. It is obvious to a person skilled in the art that means other than a pointer may also be used for indicating reserved resources.

The second pointer typically triggers radio resource management functions in a base station. An example of a use of pointers is explained below.

The lower level network element may signal the new upper limit to the upper level network element in order for the upper level network element to be able to track reserved resources in the network. The new upper limit is also signalled to a user device for informing an available data rate, for instance.

In block 208, resources of the unit are allocated to a predetermined user (or user device) according to the user device-specific upper limit.

Resources which are typically allocated include hardware and/or software resources, such as processor time or, if a plurality of processors is available, allocation may be processor allocation. These resources may be called internal or processing resources. The amount and type of hardware and/or software resources usually determine the type and amount of network resources a network can provide; for example, enough resources have to be reserved in network elements in order to enable them offer an adequate data rate or quality of service.

Telecom or radio resource management may be applied to E-DCH reception simultaneously with the first set up. In order to save in interprocessor data transferring or in data transfer between other hardware resource units, it is beneficial to process E-DCH signals by using as few hardware resource units, such as cards or processors, as possible. To avoid transferring E-DCH users between different hardware resource units, E-DCH users may be controlled virtually by performing a group thereof locating in one hardware resource unit.

Typically, telecom or radio resource management directs E-DCH users to use hardware resources. It is also important to monitor an active or inactive status of E-DCH users. Therefore, software controlling the use of resources may be a part of telecom or radio resource management.

In some cases, the user device-specific upper limit is also a minimum value for hardware resources a network has to provide. On the other hand, the user device-specific upper limit may, of course, also be the same as the limit set by an upper level network element (the upper limit). The upper level network element may also set an upper limit to be so low that a user device is only allowed to use the minimum of available resources.

There may be a plurality of resources to be allocated. The number of simultaneous E-DCH users, capacities and capabilities of base stations (or node Bs) also affect the resource allocation.

The embodiment ends in block 210. Arrow 212 depicts one possibility for repeating the method.

It should be noticed that an upper limit may be determined for a network resource other than the user device-specific upper limit; for example, an upper level network element determines a maximum, that is an upper limit, for total power in the system and the lower level network element determines a maximum, that is a user device-specific upper limit, for a data rate based on the maximum power (i.e. an upper limit).

Next, an example of pointers used in resource allocation is explained in further detail by means of Figure 3.

User-specific pointers as shown by means of Figure 3 are constricted by the capacity of the lower level network element or a corresponding device and adapted according to scheduled network resources of a user. The pointers may be simultaneously used for indicating the level of network resources that are schedulable to users.

The pointers are implemented in such a way that they support dynamic scheduling among users by being able to be swapped from one user to another according to determination of corresponding upper limits. A pointer points to a network element, such as a base station, communication context or a profile that in turn defines allocated resources necessary for processing a corresponding channel, for example E-DCH, in the network element.

Figure 3 shows an example of a set of transport format combinations (TFC) 300. Transport format combinations are marked with reference numbers 302 to 322. A transport format combination contains one transport format from each transport channel. The transport format combination set 300 is a maximum set representing the maximum capability of a user device, such as a maximum data rate a user device is able to use in transmission, or the maximum capability of a network.

An upper level network element, such as a radio network controller, may configure a transport format combination subset which provides a user device with less network resources than the maximum set. One example of a subset is marked in Figure 3 with reference number 328. Subset 328 gives a base station a range for a base station to within which to operate.

A transport format combinations subset 326 is the network resource subset currently allocated to a user device by a base station. The network resources of subset 326 are controlled by a user device.

The upper limit 330 defining a transport format combination subset controlled by a base station may be marked in a memory by using a first pointer (a node B pointer).

Upper limit 332 defining a transport format combination subset controlled by a user device may be marked in a memory by using a second pointer (a user device pointer).

TFC9 320 and TFC10 322 perform a network resource subset called a minimum set 324. The minimum set means that a network has to provide a user device with at least these network resources. The network resources of a minimum set may be separately selected for every user by an operator, for example. The minimum set may be the same to all users or it may vary, for instance, according to a customer profile: customers having a cheaper connection may have less network resources in a minimum set than customers having a more expensive connection.

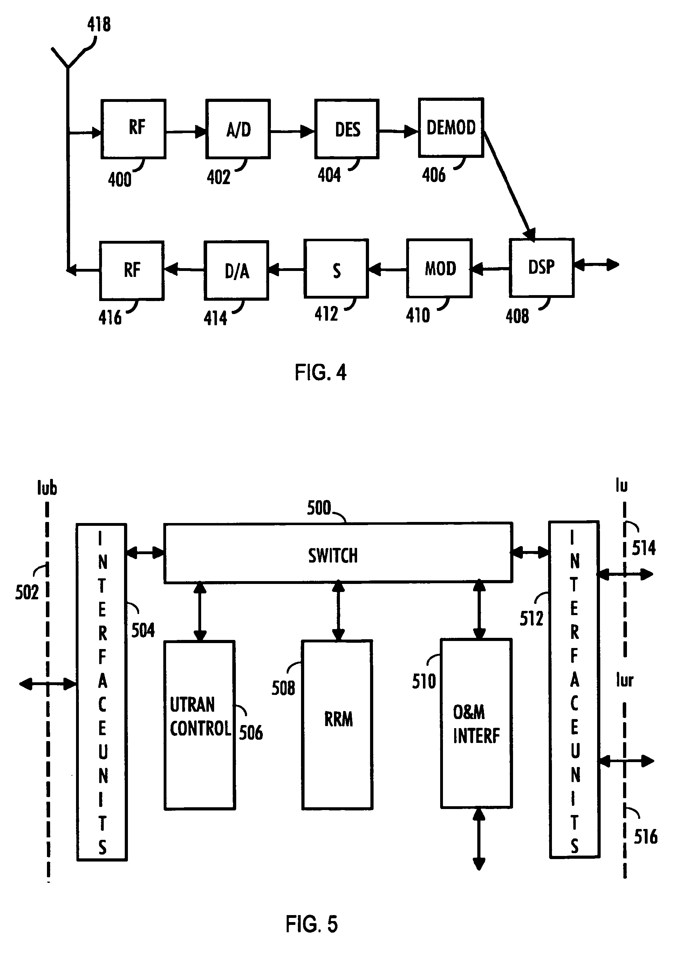

Figure 4 illustrates a simplified exemplary embodiment of a lower level network element in relation to the functionalities required by the allocation method described above. It is obvious to a person skilled in the art that the network element can deviate from what is depicted in Figure 4. The implementation of different modulation methods may change the structure of a transmitter and a receiver, for example. The network element illustrated in Figure 4 is a base station (or node B). The precise implementation of the base station is vendor-dependent.

The exemplary lower level network element provides a resource allocation method that combines network scheduling of available network resources, such as transmit power and data rates, among users with allocation of internal resources (hardware and/or software resources) of a network element, such as a base station, or a module.

In Figure 4, blocks 410 to 416 describe a transmitter and blocks 400 to 406 a receiver. The example of Figure 4 shows the radio parts of the transmitter and the receiver as separate ones, but they may also be combined.

A signal-processing block 408 describes the hardware parts of the base station required for generating user speech or data in the transmitter. There may be one signal processing block, such as in the example of the figure, or a separate one for the transmitter and the receiver.

Signal processing, which includes channel coding, is usually implemented in a DSP processor 408 (DSP = Digital Signal Processing). The aim of channel coding is to ensure that transmitted information can be restored in a receiver even if not every information bit could be received properly.

In block 410, the signal is modulated using the desired modulation method. Block 412 describes multiplication by a spreading code performed on the information to be transmitted in direct sequence spread spectrum systems and used to spread a narrowband signal into a wideband one. In an embodiment of the invention, the code used in spreading may also be the same as the code indicating the information transfer zone in routing. Modulation and spreading may also be a part of the DSP processor.

The signal is converted from a digital form into an analog one in block 414. In RF parts 416, the signal is up-converted to the selected transmission frequency either directly or via an intermediate frequency, amplified and filtered, if necessary.

In the example of the figure, the transmitter and the receiver share the same antenna 418, whereby a duplex filter is required to separate a signal to be transmitted and received from one another. The antenna may be an individual antenna or an array antenna composed of several antenna elements.

The receiver comprises RF parts 400, where a received signal is filtered, down-converted either directly to base band or to an intermediate frequency, and amplified. In block 402, the signal is converted from analog into digital by sampling and quantizing; in block 404, the direct spread wideband signal is despread by multiplication by a code sequence generated by a code generator; in block 406, the effect of the data modulation is removed by demodulation, and, in block 408, necessary signal processing is performed, such as de-interleaving, decoding and decryption.

Embodiments of the resource allocation method may at least partially be implemented by using a computer program comprising instructions for executing a computer process for receiving an upper limit set for a network resource, determining a user device-specific upper limit for another or same network resource taking into account the upper limit and allocating internal resources of a network unit to a predetermined user device according to the user device-specific upper limit. The network unit may be a network element or a module.

The computer program may be located in Digital Signal Processor 408.

The implementation solution can also be, for instance, an ASIC (Application Specific Integrated Circuit) component. An ASIC is an example of a module. A hybrid of software and hardware implementations is also feasible.

An upper level network element, such as a radio network controller, may determine the upper limit in a similar manner to that used in the prior art. The lower level network element, such as a base station, may determine the user device-specific upper limit in a similar manner to that used in the prior art.

The upper limit may be conveyed as a part of normal signalling between a radio network controller and a base station.

Embodiments are clarified above by means of Figures 2 and 3.

The computer program may be stored on a computer program distribution medium readable by a computer or a processor. The computer program medium may be, for example but not limited to, an electric, magnetic, optical, infrared or semiconductor system, device or transmission medium. The medium may be a computer readable medium, a program storage medium, a record medium, a computer readable memory, a random access memory, an erasable programmable read-only memory, a computer readable software distribution package, a computer readable signal, a computer readable telecommunications signal, and a computer readable compressed software package.

Referring to Figure 5, a simplified block diagram illustrates an example of a logical structure of a radio network controller. A radio network controller is herein taken as an example of an upper level network element. A radio network controller (RNC) is a switching and controlling element of UTRAN. Switching 500 takes care of connections between a core network and user devices, such as a mobile phones. The radio network controller is located between lub 502 and lu 514 interfaces. The network controller in connected to these interfaces via interface units 504, 512. An interface is also provided for inter-RNC transmission and it is called lur 516.

The functionality of the radio network controller can be classified into two classes: UTRAN radio resource management 508 and control functions 506. An operation and management interface function 510 serves as a medium for information transfer to and from network management functions. The radio resource management is a group of algorithms used for sharing and managing a radio path connection so that the quality and capacity of the connection are adequate. Some of the most important radio resource management algorithms include handover control, power control, admission control, packet scheduling, and code management. The UTRAN control functions take care of functions related to the set-up, maintenance and release of a radio connection between base stations and a user device.

The precise implementation of the radio network controller is vendor-dependent.

It should be noticed that the embodiments may not only be carried out in an upper level network element, such as a radio network controller and in a lower level network element, such as a base station (node B), but another option is to use different modules, such as cards, ASICs and processors, taking care of network element tasks in the same network element (or another device taking care of network control), depending on the architecture of a communication system. It is also possible that resource allocation is carried out in one module or element.

Even though the invention has been described above with reference to an example according to the accompanying drawings, it is clear that the invention is not restricted thereto but it can be modified in several ways within the scope of the appended claims.

## Claims

1. A resource allocation method in a communication system, **characterized in that** the method comprises:
determining (202) an upper limit for a network resource by an upper level network element;
signalling (204) the upper limit by the upper level network element to a lower level network element determining a user device-specific upper limit for the network resource;
determining (206) by a lower level network element the user device-specific upper limit for the network resource taking into account the upper limit; and
allocating (208) resources of the lower level network element to a predetermined user according to the user device-specific upper limit, wherein the allocating of resources comprises allocating hardware and/or software resources for receiving Enhanced Dedicated Channel (E-DCH) transmissions from a user device.

2. The method of claim 1, further comprising:
setting the user device-specific upper limit for data with Absolute or Relative Grant messages.

3. The method of claim 1, further comprising:
signalling the user device-specific upper limit to the upper level network element using the lower level network element to enable the upper level network element to track reserved resources in the network.

4. The method of claim 1, further comprising:
marking the upper limit in a memory using a first pointer and marking the user device-specific upper limit in the memory by using a second pointer.

5. The method of claim 1, further comprising:
marking the upper limit in a memory using a first pointer and marking the user device-specific upper limit in the memory using a second pointer; and
swapping the first pointer and the second pointer from one user to another according to the determination of the upper limit and the user device-specific upper limit, respectively.

6. A communication system, **characterized in that** the communication system comprises:
means in an upper level network element for determining an upper limit for a network resource;
means in the upper level network element for signalling the upper limit to a lower level network element determining a user device-specific upper limit for the network resource;
means in the lower level network element for determining the user device-specific upper limit for the network resource taking into account the upper limit; and
means in the lower level network element for allocating resources of the lower level network element to a predetermined user according to the user device-specific upper limit, wherein the resource allocation is allocation of hardware and/or software resources for receiving Enhanced Dedicated Channel (E-DCH) transmissions from a user device.

7. The communication system of claim 6, further comprising:
means for setting the user device-specific upper limit for data with Absolute or Relative Grant messages.

8. The communication system of claim 6, further comprising:
means for signalling the user device-specific upper limit to the upper level network element to enable the upper level network element to track reserved resources in the network.

9. The communication system of claim 6, wherein the upper limit is marked in a memory using a first pointer and the user device-specific upper limit is marked in the memory using a second pointer.

10. The communication system of claim 6, wherein the upper limit is marked in a memory using a first pointer and the user device-specific upper limit is marked in the memory using a second pointer, the first pointer and the second pointer being able to be swapped from one user to another according to the determination of the upper limit and the user device-specific upper limit, respectively.

11. A module in a lower level network element, **characterized in that** the module comprises:
means (408) for receiving an upper limit set for a network resource;
means (408) for determining a user device-specific upper limit for the network resource taking into account the upper limit; and
means (408) for allocating internal resources of the network element to a predetermined user according to the user device-specific upper limit, wherein the allocating comprises allocating hardware and/or software resources for receiving Enhanced Dedicated Channel (E-DCH) transmissions from a user device.

12. The module of claim 11, wherein the module is being located in a network element and the network element is a base station or node.

13. A module of claim 11 or 12, the module comprising:
the upper limit being determined by another network element or module.

14. The module of claim 11, further comprising:
means for setting the user device-specific upper limit with Absolute or Relative Grant messages.

15. The module of claim 11, further comprising:
means for signalling the user device-specific upper limit to the upper level network element to enable the upper level network element to track reserved resources in the network.

16. The module of claim 11, wherein the upper limit is marked in a memory using a first pointer and the user device-specific upper limit is marked in the memory using a second pointer.

17. The module of claim 11, wherein the upper limit is marked in a memory using a first pointer and the user device-specific upper limit is marked in the memory using a second pointer, the first pointer and the second pointer being able to be swapped from one user to another according to the determination of the upper limit and the user device-specific upper limit, respectively.

18. A computer program product encoding a computer program of instructions for executing a computer process for resource allocation, the computer program product **characterized in that** the process comprises:
receiving an upper limit set for a network resource;
determining a user device-specific upper limit for the network resource taking into account the upper limit; and
allocating internal resources of a network unit to a predetermined user according to the user device-specific upper limit, wherein the allocating comprises allocating hardware and/or software resources for receiving Enhanced Dedicated Channel (E-DCH) transmissions from a user device.

19. A computer program distribution medium readable by a computer and storing a computer program of instructions for executing a computer process for resource allocation, the computer program distribution medium **characterized in that** the process comprises:
receiving an upper limit set for a network resource;
determining a user device-specific upper limit for the network resource taking into account the upper limit; and
allocating internal resources of a network unit to a predetermined user according to the user device-specific upper limit, wherein the allocating comprises allocating hardware and/or software resources for receiving Enhanced Dedicated Channel (E-DCH) transmissions from a user device.

20. The computer program distribution medium of claim 19, the distribution medium including at least one of the following mediums: a computer readable medium, a program storage medium, a record medium, a computer readable memory, a computer readable software distribution package, a computer readable signal, a computer readable telecommunications signal, and a computer readable compressed software package.

## Patentansprüche

1. Ressourcenvergabeverfahren in einem Kommunikationssystem, **dadurch gekennzeichnet, dass** das das Verfahren Folgendes umfasst:
Bestimmen (202) einer Obergrenze für eine Netzressource durch ein Netzelement der oberen Ebene;
Signalisieren (204) der Obergrenze durch das Netzelement der oberen Ebene zu einem Netzelement der niedrigeren Ebene, das eine benutzergerätespezifische Obergrenze für die Netzressource bestimmt;
Bestimmen (206) der benutzergerätespezifischen Obergrenze für die Netzressource durch ein Netzelement der niedrigeren Ebene unter Berücksichtigung der Obergrenze; und
Vergeben (208) von Ressourcen des Netzelements der niedrigeren Ebene an einen vorbestimmten Benutzer gemäß der benutzergerätespezifischen Obergrenze, wobei das Vergeben von Ressourcen das Vergeben von Hardware- und/oder Softwareressourcen zum Empfangen von Übertragungen des Enhanced Dedicated Channel (E-DCH) von einem Benutzergerät umfasst.

2. Verfahren nach Anspruch 1, ferner umfassend:
Setzen der benutzergerätespezifischen Obergrenze für Daten mit Nachrichten der Absolute oder Relative Grant.

3. Verfahren nach Anspruch 1, ferner umfassend:
Signalisieren der benutzergerätespezifischen Obergrenze zu dem Netzelement der oberen Ebene unter Verwendung des Netzelements der niedrigeren Ebene, um es dem Netzelement der oberen Ebene zu ermöglichen, reservierte Ressourcen in dem Netz zu verfolgen.

4. Verfahren nach Anspruch 1, ferner umfassend:
Markieren der Obergrenze in einem Speicher unter Verwendung eines ersten Zeigers und Markieren der benutzergerätespezifischen Oberfläche in dem Speicher durch Verwenden eines zweiten Zeigers.

5. Verfahren nach Anspruch 1, ferner umfassend:
Markieren der Obergrenze in einem Speicher unter Verwendung eines ersten Zeigers und Markieren der benutzergerätespezifischen Oberfläche in dem Speicher durch Verwenden eines zweiten Zeigers; und
Umwechseln des ersten Zeigers und des zweiten Zeigers von einem Benutzer auf einen anderen gemäß der Bestimmung der Obergrenze bzw. der benutzergerätespezifischen Obergrenze.

6. Kommunikationssystem, **dadurch gekennzeichnet, dass** das Kommunikationssystem Folgendes umfasst:
Mittel in einem Netzelement der oberen Ebene zum Bestimmen einer Obergrenze für eine Netzressource;
Mittel in dem Netzelement der oberen Ebene zum Signalisieren der Obergrenze zu einem Netzelement der niedrigeren Ebene, das eine benutzergerätespezifische Obergrenze für die Netzressource bestimmt;
Mittel in dem Netzelement der niedrigeren Ebene zum Bestimmen der benutzergerätespezifischen Obergrenze für die Netzressource unter Berücksichtigung der Obergrenze; und
Mittel in dem Netzelement der niedrigeren Ebene zum Vergeben von Ressourcen des Netzelements der niedrigeren Ebene an einen vorbestimmten Benutzer gemäß der benutzergerätespezifischen Obergrenze, wobei die Ressourcenvergabe eine Vergabe von Hardware- und/oder Softwareressourcen zum Empfangen von Übertragungen des Enhanced Dedicated Channel (E-DCH) von einem Benutzergerät ist.

7. Kommunikationssystem nach Anspruch 6, ferner umfassend:
Mittel zum Setzen der benutzergerätespezifischen Obergrenze für Daten mit Nachrichten der Absolute oder Relative Grant.

8. Kommunikationssystem nach Anspruch 6, ferner umfassend:
Mittel zum Signalisieren der benutzergerätespezifischen Obergrenze zu dem Netzelement der oberen Ebene, um es dem Netzelement der oberen Ebene zu ermöglichen, reservierte Ressourcen in dem Netz zu verfolgen.

9. Kommunikationssystem nach Anspruch 6, wobei die Obergrenze in einem Speicher unter Verwendung eines ersten Zeigers markiert wird und die benutzergerätespezifische Obergrenze in dem Speicher unter Verwendung eines zweiten Zeigers markiert wird.

10. Kommunikationssystem nach Anspruch 6, wobei die Obergrenze in einem Speicher unter Verwendung eines ersten Zeigers markiert wird und die benutzergerätespezifische Obergrenze in dem Speicher unter Verwendung eines zweiten Zeigers markiert wird, wobei der erste Zeiger und der zweiten Zeiger gemäß der Bestimmung der Obergrenze bzw. der benutzergerätespezifischen Obergrenze von einem Benutzer zu einem anderen übergewechselt werden können.

11. Modul in einem Netzelement der niedrigeren Ebene, **dadurch gekennzeichnet, dass** das Modul Folgendes umfasst:
Mittel (408) zum Empfangen einer für eine Netzressource gesetzten Obergrenze;
Mittel (408) zum Bestimmen einer benutzergerätespezifischen Obergrenze für die Netzressource unter Berücksichtigung der Obergrenze; und
Mittel (408) zum Vergeben von internen Ressourcen des Netzelements an einen vorbestimmten Benutzer gemäß der benutzergerätespezifischen Obergrenze, wobei das Vergeben das Vergeben von Hardware- und/oder Softwareressourcen zum Empfangen von Übertragungen des Enhanced Dedicated Channel (E-DCH) von einem Benutzergerät umfasst.

12. Modul nach Anspruch 11, wobei sich das Modul in einem Netzelement befindet und das Netzelement eine Basisstation oder ein Knoten ist.

13. Modul nach Anspruch 11 oder 12, wobei das Modul Folgendes umfasst:
die Obergrenze wird durch ein anderes Netzelement oder Modul bestimmt.

14. Modul nach Anspruch 11, ferner umfassend:
Mittel zum Setzen der benutzergerätespezifischen Obergrenze mit Nachrichten der Absolute oder Relative Grant.

15. Modul nach Anspruch 11, ferner umfassend:
Mittel zum Signalisieren der benutzergerätespezifischen Obergrenze zu dem Netzelement der oberen Ebene, um es dem Netzelement der oberen Ebene zu ermöglichen, reservierte Ressourcen in dem Netz zu verfolgen.

16. Modul nach Anspruch 11, wobei die Obergrenze in einem Speicher unter Verwendung eines ersten Zeigers markiert wird und die benutzergerätespezifische Obergrenze in dem Speicher unter Verwendung eines zweiten Zeigers markiert wird.

17. Modul nach Anspruch 11, wobei die Obergrenze in einem Speicher unter Verwendung eines ersten Zeigers markiert wird und die benutzergerätespezifische Obergrenze in dem Speicher unter Verwendung eines zweiten Zeigers markiert wird, wobei der erste Zeiger und der zweite Zeiger gemäß der Bestimmung der Obergrenze bzw. der benutzergerätespezifischen Obergrenze von einem Benutzer zu einem anderen übergewechselt werden können.

18. Computerprogrammprodukt, das ein Computerprogramm von Anweisungen zum Ausführen eines Computerprozesses zur Ressourcenvergabe codiert, wobei das Computerprogrammprodukt **dadurch gekennzeichnet ist, dass** der Prozess Folgendes umfasst:
Empfangen einer für eine Netzressource gesetzten Obergrenze;
Bestimmen einer benutzergerätespezifischen Obergrenze für die Netzressource unter Berücksichtigung der Obergrenze; und
Vergeben von internen Ressourcen einer Netzeinheit an einen vorbestimmten Benutzer gemäß der benutzergerätespezifischen Obergrenze, wobei das Vergeben von Ressourcen das Vergeben von Hardware- und/oder Softwareressourcen zum Empfangen von Übertragungen des Enhanced Dedicated Channel (E-DCH) von einem Benutzergerät umfasst.

19. Computerprogramm-Verteilungsmedium, das durch einen Computer lesbar ist und ein Computerprogramm von Anweisungen zum Ausführen eines Computerprozesses zur Ressourcenvergabe speichert, wobei das Computerprogramm-Verteilungsmedium **dadurch gekennzeichnet ist, dass** der Prozess Folgendes umfasst:
Empfangen einer für eine Netzressource gesetzten Obergrenze;
Bestimmen einer benutzergerätespezifischen Obergrenze für die Netzressource unter Berücksichtigung der Obergrenze; und
Vergeben von internen Ressourcen einer Netzeinheit an einen vorbestimmten Benutzer gemäß der benutzergerätespezifischen Obergrenze, wobei das Vergeben von Ressourcen das Vergeben von Hardware- und/oder Softwareressourcen zum Empfangen von Übertragungen des Enhanced Dedicated Channel (E-DCH) von einem Benutzergerät umfasst.

20. Computerprogramm-Verteilungsmedium nach Anspruch 19, wobei das Verteilungsmedium mindestens eines der folgenden Medien umfasst: ein computerlesbares Medium, ein Programmspeichermedium, ein Aufzeichnungsmedium, einen computerlesbaren Speicher, ein computerlesbares Software-Verteilungspaket, ein computerlesbares Signal, ein computerlesbares Telekommunikationssignal und ein computerlesbares komprimiertes Software-Paket.

## Revendications

1. Un procédé d'attribution de ressources dans un système de communication, **caractérisé en ce que** le procédé comprend :
la détermination (202) d'une limite supérieure pour une ressource de réseau par un élément de réseau de niveau supérieur,
le signalement (204) de la limite supérieure par l'élément de réseau de niveau supérieur à un élément de réseau de niveau inférieur en déterminant une limite supérieure spécifique à un dispositif d'utilisateur pour la ressource de réseau,
la détermination (206) par un élément de réseau de niveau inférieur de la limite supérieure spécifique à un dispositif d'utilisateur pour la ressource de réseau en prenant en compte la limite supérieure, et
l'attribution (208) de ressources de l'élément de réseau de niveau inférieur à un utilisateur prédéterminé en fonction de la limite supérieure spécifique à un dispositif d'utilisateur, l'attribution de ressources comprenant une attribution de ressources matérielles et/ou logicielles de façon à recevoir des transmissions de canal dédié amélioré (E-DCH) à partir d'un dispositif d'utilisateur.

2. Le procédé selon la revendication 1, comprenant en outre :
la définition de la limite supérieure spécifique à un dispositif d'utilisateur pour des données avec des messages d'autorisation absolue ou relative.

3. Le procédé selon la revendication 1, comprenant en outre :
le signalement de la limite supérieure spécifique à un dispositif d'utilisateur à l'élément de réseau de niveau supérieur au moyen de l'élément de réseau de niveau inférieur de façon à permettre à l'élément de réseau de niveau supérieur de rechercher des ressources réservées dans le réseau.

4. Le procédé selon la revendication 1, comprenant en outre :
l'inscription de la limite supérieure dans une mémoire au moyen d'un premier pointeur et l'inscription de la limite supérieure spécifique à un dispositif d'utilisateur dans la mémoire au moyen d'un deuxième pointeur.

5. Le procédé selon la revendication 1, comprenant en outre :
l'inscription de la limite supérieure dans une mémoire au moyen d'un premier pointeur et l'inscription de la limite supérieure spécifique à un dispositif d'utilisateur dans la mémoire au moyen d'un deuxième pointeur, et
la permutation du premier pointeur et du deuxième pointeur entre un utilisateur et un autre en fonction de la détermination de la limite supérieure et de la limite supérieure spécifique à un dispositif d'utilisateur, respectivement.

6. Un système de communication, **caractérisé en ce que** le système de communication comprend :
un moyen dans un élément de réseau de niveau supérieur de détermination d'une limite supérieure pour une ressource de réseau,
un moyen dans l'élément de réseau de niveau supérieur de signalement de la limite supérieure à un élément de réseau de niveau inférieur en déterminant une limite supérieure spécifique à un dispositif d'utilisateur pour la ressource de réseau,
un moyen dans l'élément de réseau de niveau inférieur de détermination de la limite supérieure spécifique à un dispositif d'utilisateur pour la ressource de réseau en prenant en compte la limite supérieure, et
un moyen dans l'élément de réseau de niveau inférieur d'attribution de ressources de l'élément de réseau de niveau inférieur à un utilisateur prédéterminé en fonction de la limite supérieure spécifique à un dispositif d'utilisateur, l'attribution de ressources étant une attribution de ressources matérielles et/ou logicielles de façon à recevoir des transmissions de canal dédié amélioré (E-DCH) à partir d'un dispositif d'utilisateur.

7. Le système de communication selon la revendication 6, comprenant en outre :
un moyen de définition de la limite supérieure spécifique à un dispositif d'utilisateur pour des données avec des messages d'autorisation absolue ou relative.

8. Le système de communication selon la revendication 6, comprenant en outre :
un moyen de signalement de la limite supérieure spécifique à un dispositif d'utilisateur à l'élément de réseau de niveau supérieur de façon à permettre à l'élément de réseau de niveau supérieur de rechercher des ressources réservées dans le réseau.

9. Le système de communication selon la revendication 6, dans lequel la limite supérieure est inscrite dans une mémoire au moyen d'un premier pointeur et la limite supérieure spécifique à un dispositif d'utilisateur est inscrite dans la mémoire au moyen d'un deuxième pointeur.

10. Le système de communication selon la revendication 6, dans lequel la limite supérieure est inscrite dans une mémoire au moyen d'un premier pointeur et la limite supérieure spécifique à un dispositif d'utilisateur est inscrite dans la mémoire au moyen d'un deuxième pointeur, le premier pointeur et le deuxième pointeur pouvant être permutés entre un utilisateur et un autre en fonction de la détermination de la limite supérieure et de la limite supérieure spécifique à un dispositif d'utilisateur, respectivement.

11. Un module dans un élément de réseau de niveau inférieur, **caractérisé en ce que** le module comprend :
un moyen (408) de réception d'une limite supérieure définie pour une ressource de réseau,
un moyen (408) de détermination d'une limite supérieure spécifique à un dispositif d'utilisateur pour la ressource de réseau en prenant en compte la limite supérieure, et
un moyen (408) d'attribution de ressources internes de l'élément de réseau à un utilisateur prédéterminé en fonction de la limite supérieure spécifique à un dispositif d'utilisateur, l'attribution de ressources comprenant une attribution de ressources matérielles et/ou logicielles de façon à recevoir des transmissions de canal dédié amélioré (E-DCH) à partir d'un dispositif d'utilisateur.

12. Le module selon la revendication 11, dans lequel le module se trouve dans un élément de réseau et l'élément de réseau est une station de base ou un noeud.

13. Un module selon la revendication 11 ou 12, le module comprenant :
la limite supérieure étant déterminée par un autre élément de réseau ou module.

14. Le module selon la revendication 11, comprenant en outre :
un moyen de définition de la limite supérieure spécifique à un dispositif d'utilisateur avec des messages d'autorisation absolue ou relative.

15. Le module selon la revendication 11, comprenant en outre :
un moyen de signalement de la limite supérieure spécifique à un dispositif d'utilisateur à l'élément de réseau de niveau supérieur de façon à permettre à l'élément de réseau de niveau supérieur de rechercher des ressources réservées dans le réseau.

16. Le module selon la revendication 11, dans lequel la limite supérieure est inscrite dans une mémoire au moyen d'un premier pointeur et la limite supérieure spécifique à un dispositif d'utilisateur est inscrite dans la mémoire au moyen d'un deuxième pointeur.

17. Le module selon la revendication 11, dans lequel la limite supérieure est inscrite dans une mémoire au moyen d'un premier pointeur et la limite supérieure spécifique à un dispositif d'utilisateur est inscrite dans la mémoire au moyen d'un deuxième pointeur, le premier pointeur et le deuxième pointeur pouvant être permutés entre un utilisateur et un autre en fonction de la détermination de la limite supérieure et de la limite supérieure spécifique à un dispositif d'utilisateur, respectivement.

18. Un produit de programme informatique codant un programme informatique d'instructions destiné à exécuter un processus informatique pour une attribution de ressources, le produit de programme informatique étant **caractérisé en ce que** le processus comprend :
la réception d'une limite supérieure définie pour une ressource de réseau,
la détermination d'une limite supérieure spécifique à un dispositif d'utilisateur pour la ressource de réseau en prenant en compte la limite supérieure, et
l'attribution de ressources internes d'une unité de réseau à un utilisateur prédéterminé en fonction de la limite supérieure spécifique à un dispositif d'utilisateur, l'attribution de ressources comprenant une attribution de ressources matérielles et/ou logicielles de façon à recevoir des transmissions de canal dédié amélioré (E-DCH) à partir d'un dispositif d'utilisateur.

19. Un support de distribution de programme informatique lisible par ordinateur et contenant en mémoire un programme informatique d'instructions destiné à exécuter un processus informatique pour une attribution de ressources, le support de distribution de programme informatique étant **caractérisé en ce que** le processus comprend :
la réception d'une limite supérieure définie pour une ressource de réseau,
la détermination d'une limite supérieure spécifique à un dispositif d'utilisateur pour la ressource de réseau en prenant en compte la limite supérieure, et
l'attribution de ressources internes d'une unité de réseau à un utilisateur prédéterminé en fonction de la limite supérieure spécifique à un dispositif d'utilisateur, l'attribution de ressources comprenant une attribution de ressources matérielles et/ou logicielles de façon à recevoir des transmissions de canal dédié amélioré (E-DCH) à partir d'un dispositif d'utilisateur.

20. Le support de distribution de programme informatique selon la revendication 19, le support de distribution comprenant au moins un des supports suivants : un support lisible par ordinateur, un support à mémoire pour programmes, un support d'enregistrement, une mémoire lisible par ordinateur, un ensemble de distribution logiciel lisible par ordinateur, un signal lisible par ordinateur, un signal de télécommunications lisible par ordinateur et un ensemble logiciel compressé lisible par ordinateur.
